# EUROPEAN PATENT APPLICATION

(11) **EP 4 679 780 A1**
(43) Date of publication of application: **14.01.2026**
(21) Application number: 23926370.0
(22) Date of filing: 30.06.2023
(51) Int. Cl.: H04L 12/66, H04L 12/22, H04L 41/06, H04L 43/08, H04L 9/40, H04L 45/64, H04W 12/122

(54) **INFORMATION PROCESSING SYSTEM, INFORMATION PROCESSING METHOD, AND INFORMATION PROCESSING PROGRAM**

(30) Priority: 03.03.2023 JP 2023033208
(71) Applicant: NTT Docomo Business, Inc., Tokyo 100-8019 (JP)
(72) Inventor: TAKATSU, Takeshi, Tokyo 100-8019 (JP); HATADA, Mitsuhiro, Tokyo 100-8019 (JP)
(74) Representative: Hoffmann Eitle
(86) International application number: PCT/JP2023/024527
(87) International publication number: WO 2024/185161

(57) **Abstract**

The information processing system (1) is an information processing system including: an upper NW device (100) being a device constituting an overlay network; and a lower NW device (200) being a device constituting an underlay network. In this system, the upper NW device (100) detects unauthorized communication, specifies at least one of a communication destination and a communication source of the unauthorized communication using information regarding the unauthorized communication detected, notifies the lower NW device (200) of at least one of the communication destination and the communication source of the specified unauthorized communication. The lower NW device (200) acquires information related to communication of a terminal connected to the lower NW device (200), and blocks unauthorized communication based on the information regarding the unauthorized communication notification of which is provided.

## Description

### Technical Field

The present invention relates to an information processing system, an information processing method, and an information processing program.

### Background Art

Conventionally, there are security countermeasure techniques in end-point terminals such as personal computers and servers. For example, there are known techniques of detecting suspicious communication or behavior at an end point by using Endpoint Detection and Response (EDR).

### Citation List

### Non Patent Citation

Non Patent Literature 1: ICT Business Online (currently docomo business Watch): The IT trend terms EDR [searched on June 20, 2023], Internet (https://www.ntt.com/bizon/glossary/e-e/edr.html)

### Summary of Invention

### Technical Problem

The known technique includes problems in terms of cost and security. For example, EDR needs to be deployed on each terminal, requiring high cost. In addition, terminals such as office automation (OA) devices and Internet of Things (IoT) terminals on which EDR cannot be deployed have not undergone the measure, and thus, security risk remains.

The present invention has been made in view of the above, and aims to provide an information processing system, an information processing method, and an information processing program for achieving improvement in security and reduction in cost.

### Solution to Problem

In order to solve the above-described problems and achieve the object, an information processing system comprising: an upper NW device being a device constituting an overlay network; and a lower NW device being a device constituting an underlay network, wherein the upper NW device includes a detector that detects unauthorized communication and a notifier that specifies at least one of a communication destination and a communication source of the unauthorized communication detected by the detector, using information regarding the unauthorized communication, and notifies the lower NW device of at least one of the communication destination and the communication source of the unauthorized communication specified, and the lower NW device includes an acquirer that acquires information related to communication of a terminal connected to the lower NW device and a blocker that blocks unauthorized communication based on the information regarding the unauthorized communication notification of which is provided by the notifier.

### Advantageous Effects of Invention

According to the present invention, it is possible to achieve improvement in security and reduction in cost.

### Brief Description of Drawings

FIG. 1 is a diagram for illustrating a conventional technique.
FIG. 2 is a diagram for illustrating an example of a configuration of an information processing system according to an embodiment.
FIG. 3 is a diagram for illustrating an example of a configuration of an upper NW device according to the embodiment.
FIG. 4 is a diagram for illustrating an example of a configuration of a lower NW device according to the embodiment.
FIG. 5 is a diagram for illustrating an outline of processing performed by the information processing system according to the embodiment.
FIG. 6 is a diagram for illustrating an example of detection processing and blocking processing performed by the information processing system according to the embodiment.
FIG. 7 is a diagram for illustrating an example of detection processing and blocking processing performed by the information processing system according to the embodiment.
FIG. 8 is a flowchart for illustrating an example of a flow of processing performed by the information processing system according to the embodiment.
FIG. 9 is a diagram illustrating an example of a computer that executes an information processing program. Embodiments for Carrying Out the Invention

Hereinafter, embodiments of an information processing system, an information processing method, and an information processing program according to the present application will be described in detail with reference to the drawings. Note that the present invention is not limited by the embodiment. In the description of the drawings, the same portions are denoted by the same reference numerals, and redundant description is omitted.

### [Known technique]

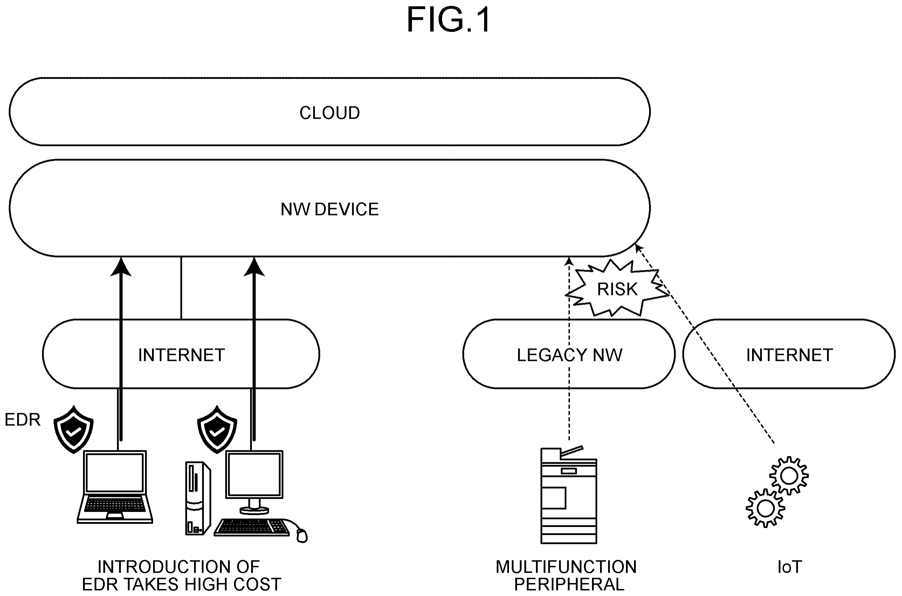

First, a known technique will be described with reference to FIG. 1. FIG. 1 is a diagram for illustrating a known technique. In the following, a device constituting an overlay network will be denoted as an upper network (NW) device, while a device constituting an underlay network will be denoted as a lower NW device. Here, the upper NW device refers to, for example, a cloud proxy server or Unified Threat Management (UTM) equipment. The lower NW device refers to, for example, a network device such as Deep Packet Inspection (DPI) equipment, a router, and a switch.

In the conventional security countermeasures, networks are divided into a reliable "inside" and an unreliable "outside", and countermeasures are taken at the boundary. An example of the inside network is a data center connected by an in-house local area network (LAN) or a virtual private network (VPN), and an example of the outside network is the Internet. For example, as a countermeasure taken at the boundary, security equipment such as a firewall, a proxy, or an Intrusion Detection System (IDS)/Intrusion Prevention System (IPS) is installed at the boundary to monitor and control the communication, thereby blocking a cyberattack from the outside.

Such prior security measures assume that data and systems to be protected are inside the network. However, with the spread of the cloud, it is not unusual that there is a target to be protected on the Internet on the outside. In this manner, the targets to be protected are scattered in various locations to blur the boundary, making it difficult to take sufficient measures with a conventional mindset.

In view of this circumstance, the concept of zero trust is spreading. In the zero trust security service, various security countermeasures are taken on the assumption that all communications are not to be trusted. Specific examples of this include enhancement of user authentication by encryption of a communication path regardless of the inside and outside of the network, use of multi-factor authentication, and the like, and integrated log monitoring of the network and various devices connected to the network. A large number of security solutions for implementing the zero trust have already emerged. For example, there has been provided a solution such as EDR that enables quick detection and handling of a cyberattack by monitoring a client device and analyzing a log.

As a security countermeasure technique in end-point terminals such as personal computers and servers, there is a known technique of detecting suspicious communication and behavior at the end point terminal by EDR.

The known technique, however, includes problems in terms of cost and security. For example, EDR needs to be deployed on each terminal, requiring high cost. In addition, countermeasures are not taken in OA devices and IoT terminals in which EDR cannot be deployed, and a security risk remains.

Therefore, an information processing system 1 of the present embodiment described below is an information processing system including an upper NW device 100 and a lower NW device 200. In this system, the upper NW device 100 detects unauthorized communication, specifies at least one of a communication destination and a communication source of the unauthorized communication by using information regarding the detected unauthorized communication, and notifies the lower NW device 200 of the at least one of the communication destination and the communication source of the specified unauthorized communication, and the lower NW device 200 blocks communication of a terminal that performs unauthorized communication based on the information regarding the unauthorized communication notification of which is provided.

With such an information processing system 1, it is possible to obtain effects such as improvement in security and reduction in cost. In addition, by blocking communication from a terminal that performs unauthorized communication, communication is controlled in units of devices without blocking the entire NW, thereby achieving robust security while ensuring the availability of the NW.

Furthermore, the information processing system 1 provides a zero trust security service unique to a provider (carrier). The zero trust security uses a configuration in which the underlay NW and the overlay NW cooperate to perform protection in an Information and Communication Technology (ICT) environment with increased complexity and cyber risk by new ways of working such as working remotely and new business expansion by utilization of IoT and the like.

The information processing system 1 provides a secure Network as a Service (NaaS) type ICT service closely linking the function of the overlay NW and the function of the underlay NW. A company that receives the service of the information processing system 1 can easily start, revise, and cancel the service of the information processing system 1 immediately by applying from a management portal site without spending a cost for Information Technology (IT) vendor outsourcing or spending a cost for NW design, making it possible to reduce operational cost taken from design to application.

Regarding the information processing system 1, the overlay NW and the underlay NW are provided by the same provider. In addition, the user who uses the information processing system 1 can perform flexible use of the system, for example, using only the overlay NW of this system and using another company for the underlay NW.

### [Configuration of information processing system]

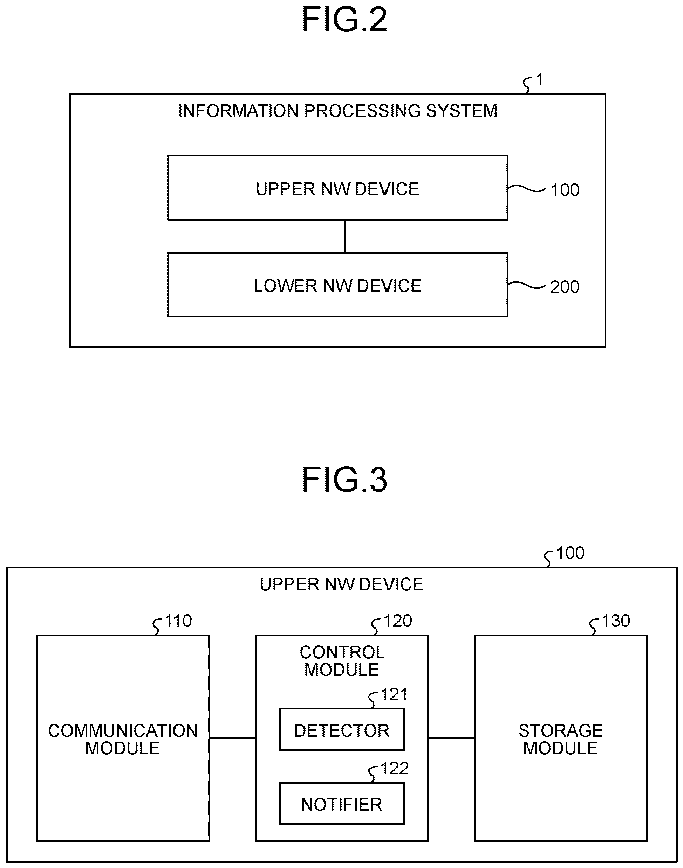

Next, a configuration of the information processing system 1 will be described with reference to FIG. 2. As illustrated in FIG. 2, the information processing system 1 includes an upper NW device 100 and a lower NW device 200. Each of these devices will be described below. In the information processing system 1, the number of the upper NW devices 100 and the number of the lower NW devices 200 are not limited to one, and each device may be provided in plurality.

The upper NW device 100 is a device that controls an upper network of the information processing system 1. The upper NW device 100 detects unauthorized communication and notifies the lower NW device 200 of the detected result.

The lower NW device 200 is a device that controls a lower network of the information processing system 1. The lower NW device 200 blocks unauthorized communication using information regarding unauthorized communication notification of which is provided from the upper NW device 100.

### [Configuration of upper NW device]

Next, a configuration of the upper NW device 100 will be described with reference to FIG. 3. As illustrated in FIG. 3, the upper NW device 100 includes a communication module 110, a control module 120, and a storage module 130. Note that these modules may be held by a plurality of devices in a distributed manner. Hereinafter, processing of these modules will be described.

The communication module 110 is implemented by a Network Interface Card (NIC) or the like, and enables communication between the control module 120 and an external device via a telecommunications link such as a LAN or the Internet. For example, the communication module 110 enables communication between the external device and the control module 120.

The storage module 130 is implemented by a semiconductor memory element such as Random Access Memory (RAM) or flash memory, or a storage device such as a hard disk or an optical disk. The information stored in the storage module 130 includes, for example, terminal information managed by the upper NW device 100, terminal information managed by the lower NW device 200, information related to unauthorized communication, information regarding detected unauthorized communication, and other information necessary for detecting unauthorized communication. Here, the information related to unauthorized communication includes information such as terminal information of a communication destination of unauthorized communication and an IP address of a communication destination of unauthorized communication. Note that the information stored in the storage module 130 is not limited to the example described above.

The control module 120 is implemented by using a Central Processing Unit (CPU), a Network Processor (NP), a Field Programmable Gate Array (FPGA), or the like, and executes a processing program stored in the memory. As illustrated in FIG. 3, the control module 120 includes a detector 121 and a notifier 122. Hereinafter, each part included in the control module 120 will be described.

The detector 121 detects unauthorized communication. For example, the detector 121 detects unauthorized communication by the security function. For example, the detector 121 detects unauthorized communication by the UTM security function.

For example, when an IP address of a connection destination of a packet matches the IP address of the unauthorized communication stored in advance in the storage module 130, the detector 121 detects the communication as an unauthorized communication and specifies the IP address of the connection destination as the IP address of the unauthorized communication destination. Methods of detecting unauthorized communications that may be used by the detector 121 include, not only an IP address, but also a communication date/time, behaviors of packets observed at the time of an attack such as a Distributed Denial of Service (DDoS) attack, a SYN flooding attack, or a buffer overflow attack, and any other existing detection method.

The notifier 122 notifies the lower NW device 200 of the information regarding the unauthorized communication detected by the detector 121. Specifically, the notifier 122 specifies at least one of a communication destination and a communication source of the unauthorized communication by using the information regarding the unauthorized communication detected by the detector 121, and notifies the lower NW device 200 of the at least one of the communication destination and communication source of the unauthorized communication specified. For example, as information regarding unauthorized communication detected by the detector 121, the notifier 122 notifies the lower NW device 200 of information such as a detection date/time, a detection type, a connection destination IP address/port, and a connection source IP address/port of the unauthorized communication. The "connection destination IP address/port" includes one or both of the connection destination IP address and the connection destination port. The "connection source IP address/port" includes one or both of the connection source IP address and the connection source port.

For example, the notifier 122 notifies the lower NW device 200 of one or both of the address information regarding the communication destination of the unauthorized communication and the address information regarding the communication source of the unauthorized communication or the address information regarding the NW including the communication source of the unauthorized communication, as the information regarding the unauthorized communication detected by the detector 121.

In response to the request from the user of the own system, the notifier 122 notifies the lower NW device 200 of one or both of the address information regarding the communication destination of the unauthorized communication and the address information regarding the communication source of the unauthorized communication or the address information regarding the NW including the communication source of the unauthorized communication.

In accordance with the information regarding the unauthorized communication detected by the detector 121, the notifier 122 notifies the lower NW device 200 of one of the address information regarding the communication source of the unauthorized communication and the address information regarding the NW including the communication source of the unauthorized communication. For example, when the detector 121 has detected a predetermined number (for example, three) or more of unauthorized communication in which the IP addresses of the terminals in a same NW are the connection source IP addresses, the notifier 122 notifies the lower NW device 200 of the address information of the NW including the communication source of the unauthorized communication. As a specific example, in a case where there are three connection source IP addresses of "192.0.2.118", "192.0.2.127", and "192.0.2.132" as the connection source IP addresses detected by the detector 121, for example, the notifier 122 converts the connection source IP address into an IP address "192.0.2.0/24" which includes a range from "192.0.2.0" to "192.0.2.255", and notifies the lower NW device 200 of the connection source IP address "192.0.2.0/24".

### [Configuration of lower NW device]

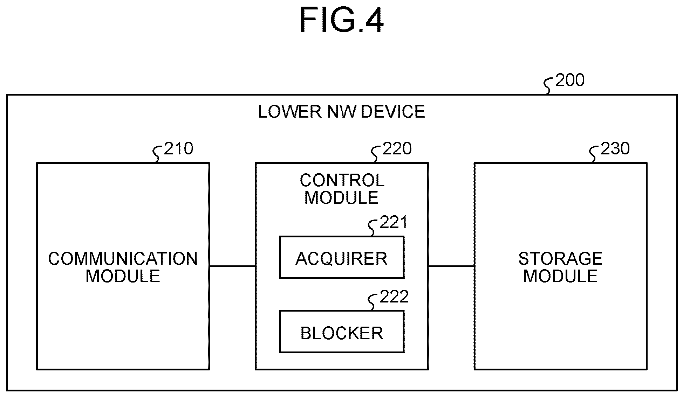

Next, a configuration of the lower NW device 200 will be described with reference to FIG. 4. As illustrated in FIG. 4, the lower NW device 200 includes a communication module 210, a control module 220, and a storage module 230. Note that these modules may be held by a plurality of devices in a distributed manner. Hereinafter, processing of these modules will be described.

The communication module 210 is implemented by an NIC or the like, and enables communication between the control module 220 and an external device via a telecommunications link such as a LAN or the Internet. For example, the communication module 210 enables communication between the external device and the control module 220.

The storage module 230 is implemented by a semiconductor memory element such as RAM or flash memory, or a storage device such as a hard disk or an optical disk. The information stored in the storage module 230 includes, for example, terminal information managed by the upper NW device 100, terminal information managed by the lower NW device 200, information related to communication of a terminal connected to the lower NW device 200, information related to unauthorized communication, information regarding detected unauthorized communication, other information necessary for detecting unauthorized communication, and other information necessary for blocking unauthorized communication. Note that the information stored in the storage module 230 is not limited to the example described above.

The control module 220 is implemented by using a CPU, an NP, an FPGA, or the like, and executes a processing program stored in the memory. As illustrated in FIG. 4, the control module 220 includes an acquirer 221 and a blocker 222. Hereinafter, each part included in the control module 220 will be described.

The acquirer 221 acquires information related to communication of a terminal connected to the lower NW device 200. For example, the acquirer 221 acquires information related to communication of OA equipment or IoT equipment connected to the lower NW device 200.

The blocker 222 blocks unauthorized communication based on the information regarding unauthorized communication notification of which is provided by the notifier 122. For example, the blocker 222 blocks the unauthorized communication using the information related to the unauthorized communication notification of which is provided by the notifier 122 and the information related to the communication of the terminal connected to the lower NW device 200 acquired by the acquirer 221.

Using the address information notification of which is provided by the notifier 122, the blocker 222 performs blocking of communication of unauthorized communication to a communication destination and performs one or both of blocking of communication from a communication source of the unauthorized communication or blocking of communication from an NW including a communication source of the unauthorized communication. For example, using the address information notification of which is provided by the notifier 122, the blocker 222 performs both of blockings, that is, blocking of communication to a communication destination of unauthorized communication and blocking of communication from an NW including a communication source of unauthorized communication.

In addition, for example, the blocker 222 blocks the communication to the unauthorized communication destination by using the information related to the unauthorized communication notification of which is provided by the notifier 122 and the information related to the communication of the terminal connected to the lower NW device 200 acquired by the acquirer 221. For example, the blocker 222 blocks the communication to the unauthorized communication destination by using the information regarding the connection source IP address/port of the unauthorized communication notification of which is provided by the notifier 122 and the information regarding the connection destination and the connection source IP address/port of the terminal connected to the lower NW device 200 acquired by the acquirer 221.

In addition, for example, the blocker 222 blocks the communication of the communication from the unauthorized communication source using the information regarding the unauthorized communication notification of which is provided by the notifier 122. For example, the blocker 222 blocks the communication from the unauthorized communication terminal by using the information regarding the connection source IP address/port of the unauthorized communication notification of which is provided by the notifier 122 and the information regarding the connection destination and the connection source IP address/port of the terminal connected to the lower NW device 200 acquired by the acquirer 221.

Further, for example, the blocker 222 blocks the communication from the NW including the unauthorized communication source by using the information regarding the unauthorized communication notification of which is provided by the notifier 122. For example, the blocker 222 blocks the communication from the NW including the unauthorized communication terminal by using the information regarding the connection source IP address/port of the unauthorized communication notification of which is provided by the notifier 122 and the information regarding the connection destination and the connection source IP address/port of the terminal connected to the lower NW device 200 acquired by the acquirer 221.

### [Outline of processing performed by information processing system]

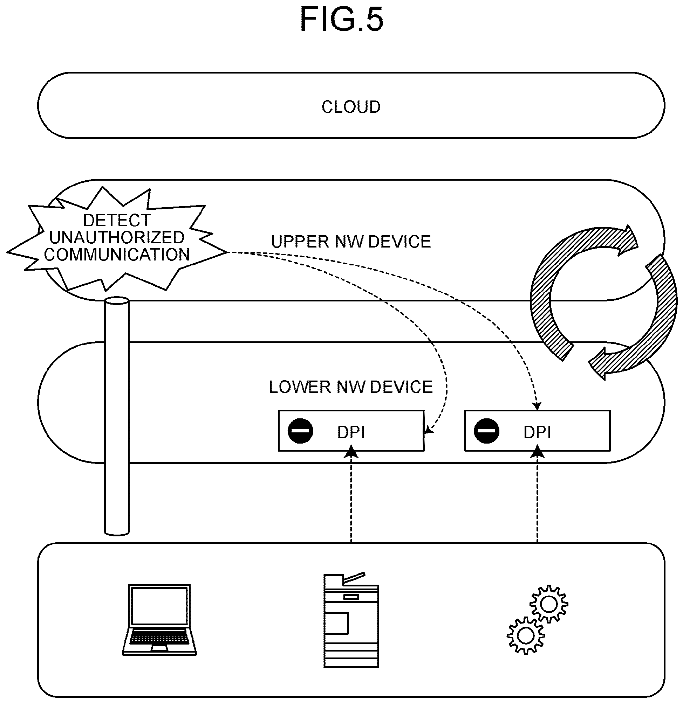

Next, an outline of processing performed by the information processing system 1 will be described with reference to FIG. 5. FIG. 5 is a diagram for illustrating an outline of processing performed by the information processing system 1.

First, the acquirer 221 of the lower NW device 200 acquires information related to communication of a terminal connected to the lower NW device 200. For example, the information related to communication of OA equipment, IoT equipment, or the like connected to the lower NW device 200 is acquired.

Subsequently, the detector 121 of the upper NW device 100 detects unauthorized communication.

Subsequently, a notifier 123 of the upper NW device 100 notifies the lower NW device 200 of information regarding unauthorized communication detected by the detector 121.

Subsequently, the blocker 222 blocks unauthorized communication based on the information regarding unauthorized communication notification of which is provided by the notifier 122.

For example, using the address information notification of which is provided by the notifier 122, the blocker 222 performs blocking of communication of unauthorized communication to a communication destination and performs one or both of blocking of communication from a communication source of unauthorized communication or blocking of communication from an NW including a communication source of unauthorized communication.

In this manner, the information processing system 1 allows the upper NW device 100 and the lower NW device 200 to closely cooperate with each other to detect and block an unauthorized communication terminal.

### [Detection/blocking processing performed by information processing system]

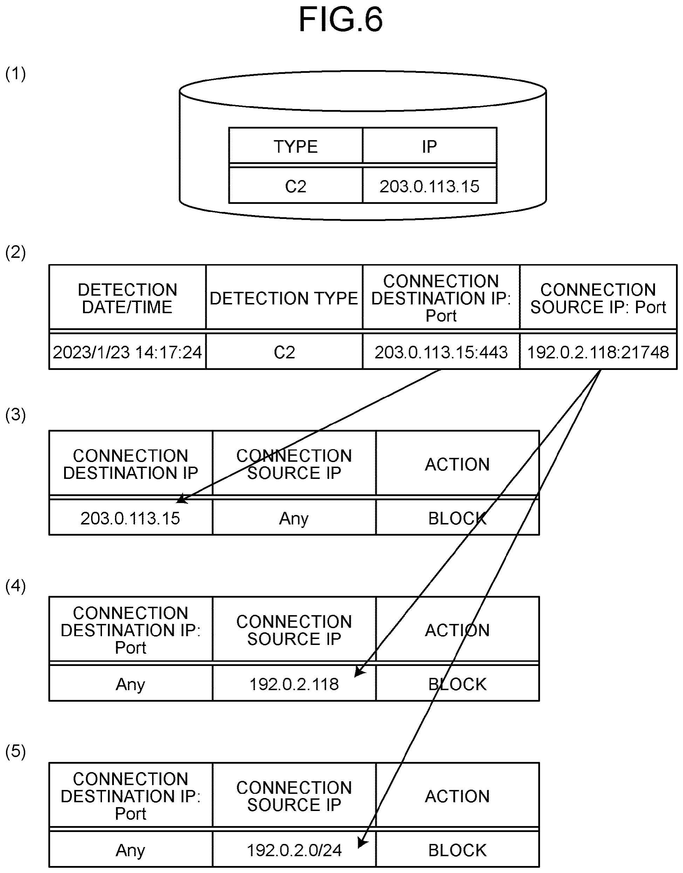

Next, detection processing and blocking processing performed by the information processing system 1 will be described with reference to FIG. 6. FIG. 6 is a diagram for illustrating an example of detection processing and blocking processing performed by the information processing system 1.

As illustrated in FIG. 6(1), the cloud proxy of the upper NW device 100 stores information related to unauthorized communication, such as the type and the IP address of unauthorized communication destination. The information related to the unauthorized communication may be stored in the cloud proxy of the upper NW device 100 or the storage module 130 of the upper NW device 100.

The detector 121 of the upper NW device 100 detects unauthorized communication as illustrated in FIG. 6(2) by using information such as the type of unauthorized communication destination and the IP address stored in the cloud proxy. At this time, when address aggregation is performed by Network Address Translation (NAT), the detector 121 of the upper NW device 100 may acquire information regarding the IP address of the terminal by using the information in a translation table to detect unauthorized communication.

For example, when the cloud proxy being the upper NW device 100 detects communication of a Command and Control server (C2 server) as unauthorized communication, the cloud proxy specifies information regarding the communication, such as "detection date/time", which is the date/time when the communication was detected, "detection type", which is the type of unauthorized communication, "connection destination IP: Port", which indicates the connection destination IP address and port number, and "connection source IP: Port", which indicates the connection source IP address and port number. Subsequently, the upper NW device 100 transmits one or both of the connection destination IP address and the connection source IP address to the lower NW device 200 (for example, DPI).

Subsequently, the blocker 222 of the lower NW device 200 uses detection information regarding unauthorized communication to block the unauthorized communication by using the DPI.

For example, as illustrated in FIG. 6 (3), using the detection information of the unauthorized communication destination (connection destination IP address/port of the unauthorized communication), the blocker 222 of the lower NW device 200 blocks the communication with the unauthorized communication destination by using the DPI. This allows the information processing system 1 to block the communication with an unauthorized communication destination at an early stage.

That is, referring to the example in FIG. 6(3), the blocker 222 blocks the communication in which there is a match between the IP address "203.0.113.15" of the connection destination transmitted from the upper NW device 100 and the IP address of the connection destination.

Moreover, as illustrated in FIG. 6(4), using the detection information of the unauthorized communication destination (connection source IP address/port of the unauthorized communication), the blocker 222 of the lower NW device 200 blocks, by using the DPI, the communication from the terminal performing unauthorized communication. This allows the information processing system 1 to block an infected terminal and prevents the spread of infection.

That is, referring to the example in FIG. 6(4), the blocker 222 blocks the communication in which there is a match between the connection source IP address "192.0.2.118" transmitted from the upper NW device 100 and the connection source IP address.

Moreover, as illustrated in FIG. 6(5), using the detection information of the unauthorized communication destination (connection source IP address/port of the unauthorized communication), the blocker 222 of the lower NW device 200 blocks, by using the DPI, the communication from the NW including the terminal performing unauthorized communication. This allows the information processing system 1 to block the NW to which the infected terminal belongs and prevents the spread of infection.

That is, referring to the example in FIG. 6(5), the notifier 122 converts the connection source IP address "192.0.2.118" transmitted from the upper NW device 100 into an IP address "192.0.2.0/24" masked with the subnet mask, and notifies the lower NW device 200 of the connection source IP address "192.0.2.0/24". Accordingly, the blocker 222 blocks communication whose connection source IP address corresponds to "192.0.2.0/24", thereby blocking not only the infected terminal but also the NW to which the infected terminal belongs.

In this manner, the information processing system 1 allows the upper NW device 100 and the lower NW device 200 to cooperate with each other to detect unauthorized communication and block each communication related to a terminal that performs unauthorized communication.

As described above, the information processing system 1 may perform both or either one of the blocking of the unauthorized communication destination and the blocking of the infected terminal or the NW to which the infected terminal belongs. For example, the notifier 122 determines whether to perform both or one of the blocking of the unauthorized communication destination and the blocking of the infected terminal or the NW to which the infected terminal belongs, according to an instruction or application content of a company being a contractor of the information processing system 1.

Furthermore, when performing blocking of the infected terminal or the NW to which the infected terminal belongs, the notifier 122 may determine whether to block the infected terminal or block the NW to which the infected terminal belongs, according to an instruction or application content of a company being a contractor of the information processing system 1.

Furthermore, when performing blocking of the infected terminal or the NW to which the infected terminal belongs, the notifier 122 may determine whether to block the infected terminal or block the NW to which the infected terminal belongs, in accordance with a detection result obtained by detection on the overlay NW side. For example, in a case where there is a plurality of unauthorized communications detected by the detector 121 of the upper NW device 100 and the number of connection source IP addresses of the detected unauthorized communications is a predetermined threshold or more, the notifier 122 provides notification to block the NW to which the infected terminal belongs. In a case where the number of connection source IP addresses of the detected unauthorized communications is less than the predetermined threshold, the notifier 122 provides notification to block only the infected terminal.

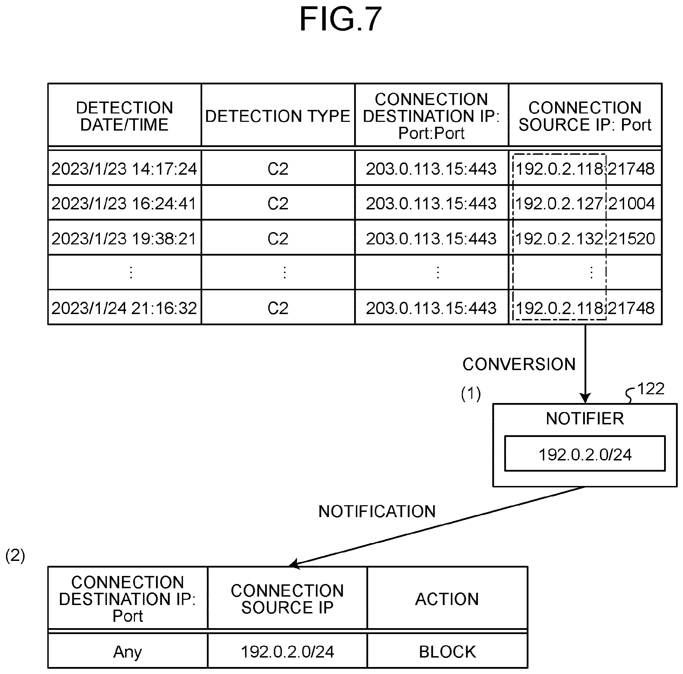

Here, an example of blocking the NW to which the infected terminal belongs will be further described with reference to FIG. 7. FIG. 7(1) illustrates conversion processing performed by the notifier 122. FIG. 7(2) illustrates handling by blocking using a connection source IP address of unauthorized communication.

As illustrated in FIG. 7(1), when the detector 121 of the upper NW device 100 has detected a predetermined number (for example, three) or more invalid communications in which the IP addresses of the terminals in the same NW are the connection source IP addresses, the notifier 122 notifies the lower NW device 200 of the address information of the NW including the communication source of the unauthorized communication. Referring to an example of FIG. 7(1), in a case where there are three connection source IP addresses of "192.0.2.118", "192.0.2.127", and "192.0.2.132" as the connection source IP addresses detected by the detector 121, for example, the notifier 122 converts the connection source IP address into an IP address "192.0.2.0/24" which includes a range from "192.0.2.0" to "192.0.2.255", and notifies the lower NW device 200 of the connection source IP address "192.0.2.0/24".

As illustrated in FIG. 7(2), when having received the connection source IP address "192.0.2.0/24", the blocker 222 of the lower NW device 200 blocks communication whose connection source IP address corresponds to "192.0.2.0/24", thereby blocking not only the infected terminal but also the NW to which the infected terminal belongs.

### [Flowchart]

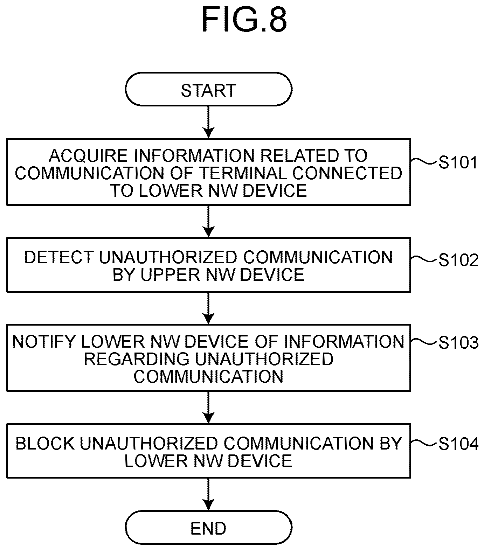

Next, a flow of processing performed by the information processing system 1 will be described with reference to FIG. 8. Note that the following steps can be executed in different orders, and may include processing to be omitted.

First, the acquirer 221 of the lower NW device 200 acquires information related to communication of a terminal connected to the lower NW device 200 (Step S101). For example, the acquirer 221 acquires information related to communication of OA equipment or IoT equipment connected to the lower NW device 200.

Next, the detector 121 of the upper NW device 100 detects unauthorized communication (Step S102). For example, the detector 121 detects unauthorized communication by the security function.

Subsequently, the notifier 122 of the upper NW device 100 notifies the lower NW device 200 of information regarding unauthorized communication detected by the detector 121 (Step S103). For example, as information regarding unauthorized communication detected by the detector 121, the notifier 122 notifies the lower NW device 200 of information such as a detection date/time, a detection type, a connection destination IP address/port, and a connection source IP address/port of the unauthorized communication.

Subsequently, the blocker 222 of the lower NW device 200 blocks the unauthorized communication based on the information regarding the unauthorized communication notification of which is provided by the notifier 122 (Step S104). For example, the blocker 222 blocks the communication of the unauthorized communication to the communication destination using the information regarding the unauthorized communication notification of which is provided by the notifier 122.

### [Effects]

The information processing system 1 according to the embodiment is an information processing system including: the upper NW device 100 being a device constituting an overlay network; and a lower NW device 200 being a device constituting an underlay network. In this system, the upper NW device 100 includes: the detector 121 that detects unauthorized communication; and the notifier 122 that specifies at least one of a communication destination and a communication source of the unauthorized communication using information regarding the unauthorized communication detected by the detector 121 and notifies the lower NW device 200 of at least one of the communication destination and the communication source of the specified unauthorized communication. The lower NW device 200 includes: the acquirer 221 that acquires information related to communication of a terminal connected to the lower NW device 200; and a blocker 222 that blocks unauthorized communication based on the information regarding the unauthorized communication notification of which is provided by the notifier 122.

With this configuration of the information processing system 1, the upper NW device 100 detects unauthorized communication, the lower NW device 200 blocks communication by using the detected information, thereby achieving improvement in security and reduction in cost. Furthermore, in the information processing system 1, by separating the detection point and the blocking point, for example, even in a case where an attack by a large-scale botnet occurs and the communication of the C2 server of the botnet is detected by the upper NW device 100 and even in a case where the overlay network is not used, the communication can be blocked in a wide range by the underlay network, making it possible to suppress spread of damage.

In the information processing system 1 according to the embodiment, the blocker 222 in the lower NW device 200 uses the information regarding the unauthorized communication notification of which is provided by the notifier 122 to block communication of the unauthorized communication to the communication destination.

With this configuration of the information processing system 1, the upper NW device 100 detects unauthorized communication, and blocks communication to the communication destination of the unauthorized communication, thereby achieving improvement in security and reduction in cost.

In the information processing system 1 according to the embodiment, the blocker 222 in the lower NW device 200 uses the information regarding the unauthorized communication notification of which is provided by the notifier 122 to block the communication from the communication source of the unauthorized communication.

With this configuration of the information processing system 1, the upper NW device 100 detects and blocks the unauthorized communication, thereby achieving improvement in security and reduction in cost.

In addition, with a configuration in which the information processing system 1 blocks communication from a terminal that performs unauthorized communication, communication is controlled in units of devices without blocking the entire NW, thereby achieving robust security while ensuring the availability of the NW.

In the information processing system 1 according to the embodiment, the blocker 222 in the lower NW device 200 uses the information regarding the unauthorized communication notification of which is provided by the notifier 122 to block the communication from the NW including the communication source of the unauthorized communication.

With this configuration of the information processing system 1, the upper NW device 100 detects unauthorized communication, and blocks communication from the NW including the terminal performing unauthorized communication, thereby achieving improvement in security and reduction in cost.

In the information processing system 1 according to the embodiment, the notifier 122 in the upper NW device 100 notifies the lower NW device 200 of one or both of the address information regarding the communication destination of the unauthorized communication and the address information regarding the communication source of the unauthorized communication or the address information regarding the NW including the communication source of the unauthorized communication, as the information regarding the unauthorized communication detected by the detector 121, and then, the blocker 222 uses the address information notification of which is provided by the notifier 122 to perform blocking of one or both of communication, that is, blocking of communication to the communication destination of the unauthorized communication, and blocking of communication from the communication source of the unauthorized communication or blocking of communication from the NW including the communication source of the unauthorized communication.

With this configuration of the information processing system 1, the upper NW device 100 detects unauthorized communication, provides notification of the communication destination of the unauthorized communication, the communication source, or the address information of the NW including the communication source, and blocks communication to the communication destination of the unauthorized communication, blocks communication from the unauthorized communication source or communication from the NW including the communication source, thereby achieving improvement in security and reduction in cost.

In the information processing system 1 according to the embodiment, in response to the request from the user of the own system, the notifier 122 of the upper NW device 100 notifies the lower NW device 200 of one or both of the address information regarding the communication destination of the unauthorized communication and the address information regarding the communication source of the unauthorized communication or the address information regarding the NW including the communication source of the unauthorized communication.

With this configuration of the information processing system 1, the upper NW device 100 detects unauthorized communication, and the lower NW device 200 blocks communication from the NW including the terminal performing unauthorized communication in response to the intention of the user of the system, thereby achieving improvement in security and reduction in cost.

In the information processing system 1 according to the embodiment, the notifier 122 in the upper NW device 100 notifies the lower NW device 200 of one of the address information regarding the communication source of the unauthorized communication and the address information regarding the NW including the communication source of the unauthorized communication in accordance with the information regarding the unauthorized communication detected by the detector 121.

With this configuration of the information processing system 1, the upper NW device 100 detects unauthorized communication, and blocks communication from the terminals that perform unauthorized communication in a case where the number of terminals that perform unauthorized communication included in the predetermined NW is less than a threshold, and blocks the communication from the NW including the terminals that perform unauthorized communication in a case where the number of terminals that perform unauthorized communication exceeds the threshold, thereby achieving improvement in security and reduction in cost.

### [Program]

It is also possible to create a program in which the processing executed by the information processing system 1 in the above embodiment is described in a language executable by a computer. In this case, by execution of the program by the computer, effects similar to those of the above embodiment can be obtained. Furthermore, the program may be recorded in a computer-readable recording medium, and the program recorded in the recording medium may be read and executed by the computer to implement processing similar to the above-described embodiment.

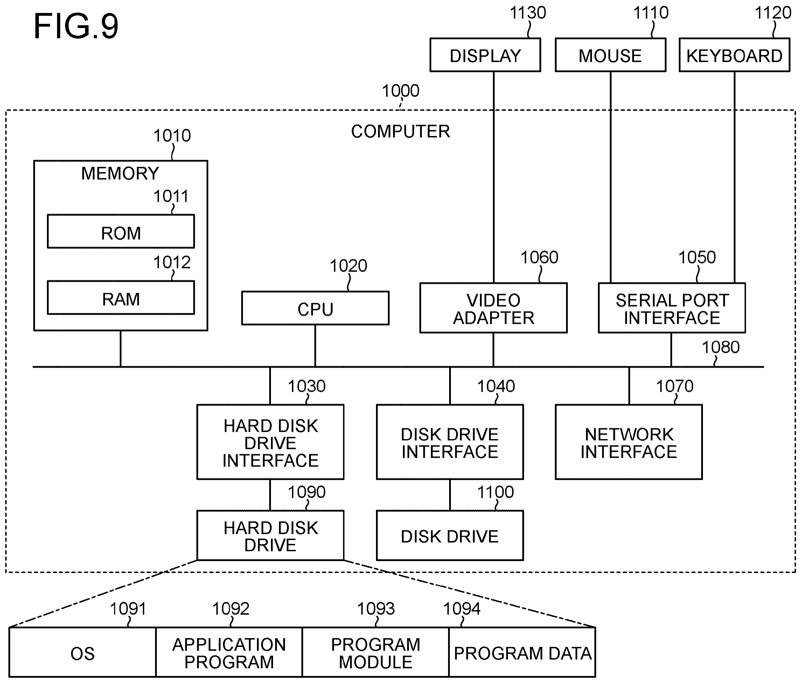

FIG. 9 is a diagram illustrating an example of a computer that executes an information processing program. As illustrated in FIG. 9, a computer 1000 includes, for example, memory 1010, a CPU1020, a hard disk drive interface 1030, a disk drive interface 1040, a serial port interface 1050, a video adapter 1060, and a network interface 1070. These units are connected to each other via a bus 1080.

The memory 1010 includes read only memory (ROM) 1011 and RAM 1012. The ROM 1011 stores, for example, a boot program such as a Basic Input Output System (BIOS). The hard disk drive interface 1030 is connected to a hard disk drive 1090. The disk drive interface 1040 is connected to a disk drive 1100. For example, the disk drive 1100 is a drive into which a removable storage medium such as a magnetic disk or an optical disk is inserted. For example, the serial port interface 1050 is connected to a mouse 1110 and a keyboard 1120. For example, the video adapter 1060 is connected to a display 1130.

Here, as illustrated in FIG. 9, the hard disk drive 1090 stores an operating system (OS) 1091, an application program 1092, a program module 1093, and program data 1094, for example. Each table described in the above embodiment is stored in the hard disk drive 1090 or the memory 1010, for example.

Furthermore, the information processing program is stored in the hard disk drive 1090 as, for example, a program module describing commands to be executed by the computer 1000. Specifically, the program module 1093 describing each processing to be executed by the computer 1000 described in the above embodiment is stored in the hard disk drive 1090.

Furthermore, data used for information processing performed by the information processing program is stored as program data in the hard disk drive 1090, for example. The CPU 1020 reads the program module 1093 and the program data 1094 stored in the hard disk drive 1090 to the RAM 1012 as necessary, and executes each procedure described above.

The program module 1093 and the program data 1094 related to the information processing program are not limited to the form of being stored in the hard disk drive 1090, and may be stored in a removable storage medium and read by the CPU 1020 via the disk drive 1100 or the like, for example. Alternatively, the program module 1093 and the program data 1094 related to the control program may be stored in another computer connected via a network such as a LAN or a Wide Area Network (WAN) and read by the CPU1020 via the network interface 1070.

### [Others]

Various embodiments, described herein in detail with reference to the drawings as a plurality of embodiments, are merely examples and are not intended to limit the present invention to the plurality of embodiments. The features described herein may be implemented by various methods, including various modifications and improvements based on the knowledge of those skilled in the art.

In addition, the "terms such as a module, a part, or a noun with suffix -er or suffix -or)" described above can be read as a unit, a means, a circuit, or the like. For example, a communication module, a control module, and a storage module can be replaced with a communication unit, a control unit, and a storage unit, respectively.

### Explanation of Reference

- 1: INFORMATION PROCESSING SYSTEM

- 100: UPPER NW DEVICE
- 110: COMMUNICATION MODULE
- 120: CONTROL MODULE
- 121: DETECTOR
- 122: NOTIFIER
- 130: STORAGE MODULE
- 200: LOWER NW DEVICE
- 210: COMMUNICATION MODULE
- 220: CONTROL MODULE
- 221: ACQUIRER
- 222: BLOCKER
- 230: STORAGE MODULE

## Claims

1. An information processing system comprising: an upper NW device being a device constituting an overlay network; and a lower NW device being a device constituting an underlay network,
wherein the upper NW device includes:
a detector that detects unauthorized communication; and
a notifier that specifies at least one of a communication destination and a communication source of the unauthorized communication detected by the detector, using information regarding the unauthorized communication, and notifies the lower NW device of at least one of the communication destination and the communication source of the unauthorized communication specified, and
the lower NW device includes:
an acquirer that acquires information related to communication of a terminal connected to the lower NW device; and
a blocker that blocks unauthorized communication based on the information regarding the unauthorized communication notification of which is provided by the notifier.

2. The information processing system according to claim 1,
wherein the blocker blocks communication to the communication destination of the unauthorized communication notification of which is provided by the notifier by using the information regarding the unauthorized communication.

3. The information processing system according to claim 1,
wherein the blocker blocks communication from the communication source of the unauthorized communication notification of which is provided by the notifier by using the information regarding the unauthorized communication.

4. The information processing system according to claim 1,
wherein the blocker blocks communication from a NW including the communication source of the unauthorized communication notification of which is provided by the notifier by using the information regarding the unauthorized communication.

5. The information processing system according to claim 1,
wherein the notifier notifies the lower NW device of one or both of address information regarding the communication destination of the unauthorized communication detected by the detector and address information regarding the communication source of the unauthorized communication or address information regarding an NW including the communication source of the unauthorized communication, as the information regarding the unauthorized communication, and
the blocker uses the address information notification of which is provided by the notifier to perform blocking of one or both of communication, that is, blocking of communication to the communication destination of the unauthorized communication, and blocking of communication from the communication source of the unauthorized communication or blocking of communication from the NW including the communication source of the unauthorized communication.

6. The information processing system according to claim 5,
wherein, in response to a request from a user of an own system, the notifier notifies the lower NW device of one or both of the address information regarding the communication destination of the unauthorized communication and the address information regarding the communication source of the unauthorized communication or the address information regarding the NW including the communication source of the unauthorized communication.

7. The information processing system according to claim 5,
wherein the notifier notifies the lower NW device of either the address information regarding the communication source of the unauthorized communication detected by the detector or the address information regarding the NW including the communication source of the unauthorized communication in accordance with the information regarding the unauthorized communication.

8. An information processing method to be executed by an upper NW device being a device constituting an overlay network, and a lower NW device being a device constituting an underlay network, the information processing method comprising:
an acquisition process of acquiring, by the lower NW device, information related to communication of a terminal connected to the lower NW device;
a detection process of detecting, by the upper NW device, unauthorized communication;
a notification process of specifying, by the upper NW device, at least one of a communication source and a communication destination of the unauthorized communication detected by the detection process by using information regarding the unauthorized communication, and notifying the lower NW device of at least one of the communication source and the communication destination specified; and
a blocking process of blocking, by the lower NW device, the unauthorized communication notification of which is provided by the notification process based on the information regarding the unauthorized communication.

9. An information processing program causing a computer functioning as an upper NW device being a device constituting an overlay network, and a computer functioning as a lower NW device being a device constituting an underlay network, to execute following steps,
the information processing program causing the computer functioning as the upper NW device to execute:
a detection step of detecting unauthorized communication; and
a notification step of specifying at least one of a communication destination and a communication source of the unauthorized communication detected by the detection step, using information regarding the unauthorized communication, and notifying the lower NW device of at least one of the communication destination and the communication source of the unauthorized communication specified,
the information processing program causing the computer functioning as the lower NW device to execute:
an acquisition step of acquiring information related to communication of a terminal connected to the lower NW device; and
a blocking step of blocking the unauthorized communication notification of which is provided by the notification step based on the information regarding the unauthorized communication.
